# EUROPÄISCHE PATENTSCHRIFT

(11) **EP 2 081 066 B1**
(45) Veröffentlichungstag und Bekanntmachung des Hinweises auf die Patenterteilung: **14.08.2019**
(21) Anmeldenummer: 08169855.7
(22) Anmeldetag: 25.11.2008
(51) Int. Cl.: G02B 6/38, H01R 13/627

(54) **Steckverbindung mit Adaptergehäusen zur Aufnahme einer Stecker- bzw. einer Buchsenanordnung**
Plug-in connection with adapter casings to accept a plug-in or socket arrangement
Connecteur à fiches doté de boîtiers d'adaptateurs destiné à la réception d'une prise ou d'un agencement de douille

(30) Priorität: 21.01.2008 DE 202008000885 U; 01.02.2008 DE 202008001535 U; 12.04.2008 DE 202008005101 U
(43) Veröffentlichungstag der Anmeldung: 22.07.2009
(73) Patentinhaber: Weidmüller Interface GmbH & Co. KG, 32758 Detmold (DE)
(72) Erfinder: Ziemke, Jürgen, 32760 Detmold (DE); Schumacher, Ralf, 32657 Lemgo (DE); Mücke, Michaela, 32756 Detmold (DE); Muhs, Andreas, 34434 Borgentreich (DE); Schröder, Volker, 32657 Lemgo (DE)
(74) Vertreter: Dantz, Jan Henning

(56) Entgegenhaltungen:
- EP-A- 1 317 025
- EP-A1- 1 860 473
- DE-A1-102006 000 702
- US-A1- 2003 148 652
- US-A1- 2004 242 067
- US-A1- 2006 089 049
- US-A1- 2007 047 877
- US-B1- 7 316 583

## Beschreibung

Die Erfindung betrifft eine Steckverbindung nach dem Oberbegriff des Anspruchs 1. Steckverbindungen der gattungsgemäßen Art ermöglichen den Einsatz der in die Adaptergehäuse eingesetzten Stecker- und Buchsenanordnungen auch in rauer Umgebung - beispielsweise in Produktionsanlagen oder Fahrzeugen - durch Erreichen einer im Vergleich zur Schutzklasse - in der Regel IP20 - der inneren Stecker- und Buchsenanordnung höheren Schutzklasse wie z.B. IP65 oder IP67.

Eine erste derartige Anordnung für einen Telefonstecker ist aus der US 4,349,236 (Bell Telephone Laboratories) bekannt.

Weiterentwickelt wurde die Idee des Erreichens höher Anforderungen aus Umgebungsklassifikationen beispielsweise in der US 6,475,009 B2 und der US 6,595,791 B2. In diesen Schriften werden verschiedene Adapter-Steckergehäuse und Adapter-Buchsengehäuse offenbart, welche jeweils zur Aufnahme von RJ45-Steckern bzw. von RJ45-Buchsen geeignet sind. In diesem Zusammenhang sei auch die DE 102 36 275 B3 genannt.

Weiter optimierte Lösungen zeigen die DE 20 2006 011 910 und die EP 1 848 068 A1. In diesen Schriften werden Adaptergehäuse offenbart, die nicht nur zur Aufnahme für Stecker- und Buchsenanordnungen zur Verbindung elektrischer Leiter sondern auch für Stecker- und Buchsenanordnungen anderer Art, insbesondere zur Aufnahme von Stecker- und Buchsenanordnungen zum Verbinden von Lichtwellenleitern geeignet sind.

Dabei kann allerdings ein weiteres Problem auftreten. Viele Steckeranordnungen zum Verbinden von Lichtwellenleitern, so SC-Stecker und -buchsen, sind als so genannte "Push-Pull"-Stecker aufgebaut, die ein äußeres Teil aufweisen, welches relativ zu einem inneren Teil um einen begrenzten Weg verschiebbar ist. Zum Lösen derartiger Steckeranordnungen ist es notwendig, dass äußere Gehäuse der Steckeranordnung um diesen definierten Weg relativ zum inneren Gehäuse zu verschieben.

Diese Lösung hat sich zwar an sich bewährt. Optimierungsbedarf besteht aber in Hinsicht auf den Einsatz derartiger SC-Steckverbinder niedrigerer Schutzart wie IP20 in Adaptergehäusen zur Realisierung einer höheren Schutzart wie IP65 oder mehr.

Nach der DE 10 2006 000 702 A1 wird, um die Push-Pull-Verbindung der SC-Stecker- und -buchsenanordnung auch bei Einsatzes eines Adaptergehäuses lösen zu können, vorgeschlagen, das äußere Adaptergehäuse zur Aufnahme des einen Steckverbinderteils zweiteilig auszubilden, wobei die beiden Gehäuseteile um einen durch Anschläge begrenzten Weg relativ zueinander verschiebbar sind. Derart ist zwar über die Verriegelung des IP67-Adaptergehäuses auch die Verriegelung des SC-RJ-Einsatzes und das Verrasten eines IP20-SC-RJ-Steckers auf der IP67-Seite einer Buchse zu Servicezwecken lösbar, aber es ist ein zweiteiliges, in sich begrenzt verschiebbares Gehäuse zu realisieren, das hinsichtlich seiner Handhabbarkeit und seiner Stabilität noch zu optimieren ist.

Es wurde daher auch bereits angedacht, die Verriegelung des SC-RJ-Einsatzes außer Kraft zu setzen.

Es ist auch bekannt, Verriegelungshaken an einem der inneren Steckverbinder durch Deformieren zu deaktivieren. Zum Stand der Technik werden insoweit die gattungsgemäße US 2006/089049 A1 geannt. Einen analogen Stand der Technik offenbaren die US 2007/047 877 A1, die US 7 316 583 B1, die EP 1 860 473 A1 und die US 2003/148652 A1.

Es wurde ferner unter anderem auch der Einsatz eines einheitlichen Schutzgehäuses für die unterschiedlichsten Kupfer- und LWL-Einsätze angedacht. Bei der bisher angedachten Lösung bleibt eine der beiden Steckeranordnungen niedriger Schutzart - insbesondere die SC-Buchsenanordnung unverändert, so dass es an sich nach wie vor möglich ist, diese Teil beispielsweise für Prüf- und Servicezwecke auch mit einer "normkonformen" SC-Steckeranordnung im Push-Pull-Standard bzw. nach der Norm ohne äußeres Adapterteil zu verbinden. Dies bedeutet, dass im Servicefall an die in ein Adaptergehäuse eingesetzte SC-Buchsenanordnung, welche nach der Norm IEC 874-19 aufgebaut ist, eine Steckeranordnung nach dieser Norm ohne Adaptergehäuse kuppelbar ist, wobei die Teile z.B. an einem Rasthaken miteinander verrastet werden.

Dies wird dadurch erreicht, dass die in das zugehörige Adaptergehäuse eingesetzte SC-Steckeranordnung eine veränderte Ausgestaltung derart aufweist, dass die Rasthaken der SC-Buchsenanordnung beim Zusammenstecken mit dem SC-Steckerteil im Adaptergehäuse nach außen aufgebogen werden.

Bei der angedachten Lösung und nach der gattungsgemäßen Lösung der US 2006 / 089 049 A1 kann es aber vorkommen, dass nach dauerhaftem Stecken (über Jahre) einer IP67-Steckerverbindung kein IP20-Stecker zu Servicezwecken mehr verrastbar ist, da vor dem Hintergrund der hohen Temperaturen im Transceiver die verfomten Rasthaken oder die SC-Halteklammern durch Aufweiten (außer Kraft setzen) bleibend verformt werden können und nicht mehr zum Eingriff kommen. Dieses Problem gilt es daher zu beheben.

Die Erfindung hat vor diesem Hintergrund die Aufgabe, die vorstehend genannte Lösung derart weiterzuentwickeln, dass auch nach Jahren noch ein Kuppeln der in einem Adaptergehäuse aufgenommenen Buchsenanordnung mit Push-Pull-Verriegelungsmitteln mit einer Push-Pull-Steckeranordnung ohne Adapter-Schutzgehäuse möglich ist. Dabei ist diese Aufgabe nicht auf Steckverbinder mit Stecker- und Buchsenteilen im SC-Standard beschränkt sondern es soll ganz allgemein eine vorteilhafte Integration von IP20-Push Pull-Steckverbindern (wie z.B. der SC bzw. der SC-RJ) in einem Steckverbinder-Schutzgehäuse höherer Schutzart (z.B. IP67) erfolgen, wie sie beispielhaft - und nicht abschließend - in den Industrienormvorschlägen IEC 61076-3-117 oder IEC 61076-3-106 dargestellt sind. Zu Prüfzwecken soll darüber hinaus auch eine Push-Pullverbindung realisierbar sein, bei welcher die Steckeranordnung nicht mit einem Adaptergehäuse versehen wird.

Die Erfindung löst diese Aufgabe durch den Gegenstand des Anspruchs 1.

Danach ist die in das Adaptergehäuse des steckerartigen Steckverbinders eingesetzte Steckeranordnung derart ausgelegt, dass die Verriegelungsmittel der Buchsenanordnung im zusammengesteckten Zustand nicht oder nicht wesentlich ausgelenkt oder deformiert werden und im verbundenen Zustand außer Funktion sind, so das - in dieser Konfiguration - auf diese Weise keine verriegelte Push-Pullverbindung zwischen der Steckeranordnung und der Buchsenanordnung realisiert wird.

Dabei ist der steckerartige Steckverbinder verriegelungsmittelfrei ausgestaltet, d.h. derart, dass die Verriegelungsmittel der Buchsenanordnung im Adaptergehäuse des buchsenartigen Steckverbinders nicht mit Verriegelungsmitteln an der Buchsenanordnung im buchsenartigen Steckverbinder in Eingriff gelangen und überhaupt nicht oder jedenfalls nicht wesentlich deformiert werden.

Unter "nicht wesentlich deformiert" ist zu verstehen, dass eine möglicherweise doch noch auftretende geringe Deformation derart gering ist, dass sie nach einem über einen längeren Zeitraum von z.B. mehr als drei Jahren nicht in mehr als 10%, insbesondere nicht in mehr als 5% der Fälle zu einer dauerhaften Deformation der Verriegelungsmittel führt, welche diese unbrauchbar machen.

Damit bleibt es auch nach jahrelangem Einsatz möglich, die stabil ausgestaltete Steckverbindung mit den beiden Adapterschutzgehäuse zu lösen und dann an die innere, vorzugsweise genormte Buchsenanordnung des buchsenartigen Steckverbinders eine Steckeranordnung anzusetzen und zu verriegeln/verrasten, welche über zu den Verriegelungsmitteln, insbesondere Rasthaken, korrespondierende Verriegelungsmittel einer Push-Pull Verbindung verfügt, wodurch Tests und dgl. durchführbar sind.

Dabei muß nicht mehr über die Verriegelung des z.B. IP67-Schutzgehäuses auch die Verriegelung des Steckverbinder-Einsatzes (z.B. SC-RJ) gelöst werden. Es kann ein Adaptergehäuse eingesetzt bzw. realisiert werden, welches dennoch für die unterschiedlichsten elektrischen Leiter (z.B. Kupfer: RJ45, USB, ...) und LWL-Einsätze (z.B. SC-RJ, LC-Duplex, ...) verwendbar ist, um hohe Kosten für individuelle Schutzgehäuse der Einsätze zu vermeiden

Ein wesentlicher Vorteil der erfindungsgemäßen Lösung ist denn auch darin zu sehen, dass ein deutlich robusteres und einfacher aufgebautes Adaptergehäuse einsetzbar wird, als in der DE 10 2006 000 702 A1 vorgeschlagen. So kann insbesondere auf die relative Verschiebbarkeit der zwei Gehäuseteile an einer Kabelverschraubung und zum Steckgesicht hin verzichtet werden.

Zudem bleibt es möglich, die Vorschrift einiger Industrienormen zu erfüllen, nach denen das Verrasten von IP20-LWL-Steckern zu Servicezwecken auch auf der IP67-Seite von Flanschen / Wanddurchführungen und Geräten möglich sein muss.

Das Verriegeln der beiden äußeren Adaptergehäuse kann an sich in beliebiger Art bzw. mit beliebig ausgebildeten Verriegelungsmitteln erfolgen, so kann das Verriegeln beispielsweise mittels einer Verschraubung, mittels einer Bajonettverriegelung oder mittels Rastmitteln erfolgen.

Nach einer besonders vorteilhaften Ausgestaltung der Erfindung ist vorgesehen, dass
- SC-Halteklammern bzw. Rasthaken des Transceivers bzw. der Kupplung im IP67-Schutzgehäuse mit den SC- bzw. SC-RJ-Einsatz nicht verrasten,
- die SC-Halteklammern bzw. Rasthaken für den SC- bzw. SC-RJ-Steckereinsatz nicht aufgeweitet werden (aber an der Buchsenanordnung immer vorhanden sind) und
- beim Einstecken einer IP20-Servicesteckeranordnung diese sicher mit den SC-Halteklammern/Rasthaken bzw. Push-Pull-Verriegelungsmitteln des Transceivers bzw. der Kupplung verrasten.

Besonders bevorzugt werden hierzu die SC-Steckeranordnung/ der SC-Einsatz und der Hilfsrahmen / der Zinkdruckguss-Adapter so modifiziert, dass die SC-Halteklammern auf der IP67-Steckerseite "ins Leere" laufen und die SC-Einsätze in dem Hilfsrahmen etwas weiter hinten - vom Steckgesicht weg - in einer Aufnahmegeometrie, vorzugsweise Nut oder dgl. - axial festgesetzt werden.

Dadurch kann auf ein zweiteiliges teures Steckergehäuse mit axialer Verschieblichkeit eines der beiden Gehäuseteile und den Anschlägen verzichtet werden.

Es ist auch möglich, ein identisches Steckergehäuse für alle Kupfer- und LWL-Einsätze realisiert werden. Es ist möglich, dass ein IP20-Servicestecker noch nach Jahren auf der IP67-Seite einer Wanddurchführung oder eines IP67-Gerätes sicher verrastet. Es wird zudem eine einheitliche, schnelle und einfache Montage von vorn ohne Fehlermöglichkeiten sichergestellt. Es ergibt sich auch ein robustes Design, bei welchem bei der Montage an den Einzelteilen nichts zerbrechen kann.

Vorteilhaft ist auch, dass das Werfen einer Fasernschlaufe von bis zu 2mm durch axialen Druck hinten auf die Verschraubung vermieden wird. Auch eine Erhöhung der Einfügedämpfung wird vermieden, genau so, wie das Übertragen der Verschiebekraft der Schiebehülse über die Fasern vermieden werden kann.

Ergänzend können die Steck- und Ziehkraft erheblich reduziert werden und es kann eine hohe Auszugskraft erreicht werden (hinterer Teil nicht verschieblich / von vorn bestückt u. fester Anschlag; Kevla-Vercrimpung am Zinkdruckgussadapter).

Zudem kann eine höhere statische Querlast / transversale Biegebeanspruchung auf die Verschraubung aufgebracht werden und es können erheblich Kosten bei der Investition als auch bei der Kabelkonfektionierung gespart werden.

Es ist zudem möglich, die Lösung einfach auch auf bestehende IP67-Schutzgehäusevarianten zu übertragen (gleiche Einsätze) und derart ein Baukastenkonzept mit verschiedensten Einsätzen zu schaffen.

Vorteilhafte Ausgestaltungen sind den Unteransprüchen zu entnehmen.

Nachfolgend wird die Erfindung unter Bezug auf die Zeichnung anhand von Ausführungsbeispielen näher erläutert, wobei auch weitere Vorteile der Erfindung deutlich werden. Es zeigt:
- Fig. 1a: eine erste perspektivische Ansicht eines ersten Steckverbinders mit einem Adaptergehäuse mit einer darin eingesetzten neuartigen Steckeranordnung;
- Fig. 1b: eine zweite perspektivische Ansicht der Anordnung aus Fig. 1;
- Fig. 1c: eine Sprengansicht eines Adaptergehäuses des Steckverbinders aus Fig. 1a und 1b;
- Fig. 2: einen Schnitt durch ein Ausschnitt des Verbindungsbereiches zwischen dem steckerartigen Steckverbinder nach Art der Fig. 1, der in einen zweiten korrespondierenden, buchsenartigen Steckverbinder eingesetzt ist;
- Fig. 3a: einen Schnitt durch den Verbindungsbereich zwischen dem buchsenartigen Steckverbinder aus Fig. 2 mit einer SC-Servicesteckeranordnung ohne ein Adapter-Schutzgehäuse;
- Fig. 3b: eine Ausschnittsvergrößerung aus Fig. 3a; und
- Fig. 4a: eine SC-Steckeranordnung mit einem Hilfsrahmen und zwei Einsätzen;
- Fig. 4b: einen der Einsätze aus Fig. 4a;
- Fig. 4c: den Hilfsrahmen aus Fig. 4a; und
- Fig. 5: eine perspektivische Ansicht eines weiteren Adaptergehäuses mit einer darin eingesetzten Steckeranordnung.

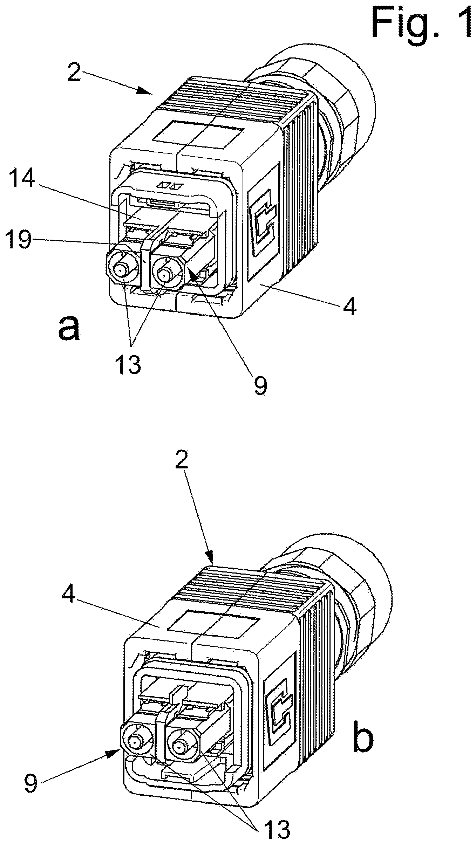

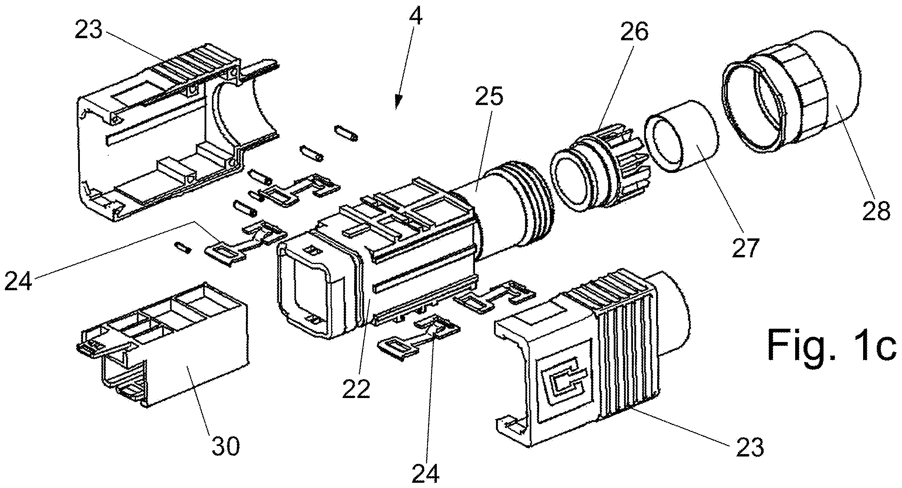

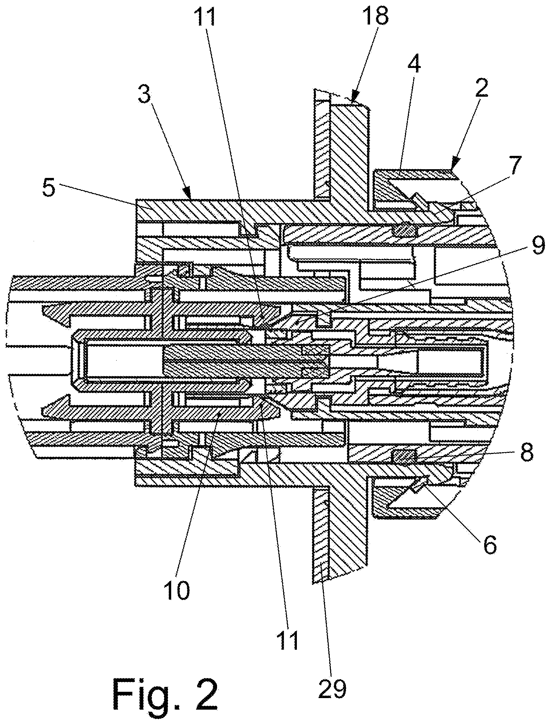

Fig. 2 zeigt einen Schnitt durch einen Teilbereich einer Steckverbindung 1 mit einem ersten, steckerartigen Steckverbinder 2 (Fig. 1) und einem zweiten, buchsenartigen Steckverbinder 3.

Der erste Steckverbinder 2 weist eine äußere Adapter-Schutzgehäuseanordnung - nachfolgend kurz als Adaptergehäuse 4 bezeichnet - auf, in die eine Steckeranordnung 9 eingesetzt ist.

Die Buchsenanordnung 3 weist ebenfalls eine äußere Adapter-Schutzgehäuseanordnung - nachfolgend kurz als Adaptergehäuse 5 bezeichnet - auf, in das eine Buchsenanordnung 10 eingesetzt ist.

Eine Sprengansicht des Adaptergehäuses 4 ist in Fig. 1c abgebildet.

Das mehrteilige Adaptergehäuse der Fig. 1c ist zwar vorteilhaft, die Erfindung eignet sich aber prinzipiell nicht nur für dieses sondern ach für andersartig aufgebaute ein- oder mehrteilige Adaptergehäuse. Vorteilhaft ist, dass das Adaptergehäuse 4 zwar mehrteilig ist, dass aber nicht ein Gehäuseteil an der Kabelverschraubung und ein Gehäuseteil am Steckgesicht festzulegen ist, die relativ zueinander verschiebbar sind. Insoweit ist das Gehäuse robust, wenn es auch an sich durchaus verschiebliche Teile wie eine Verriegelungshülse oder dgl. aufweisen kann, um Verriegelungsmittel einer Push-Pullverriegelung zwischen den Adaptergehäusen 4, 5 zu realisieren.

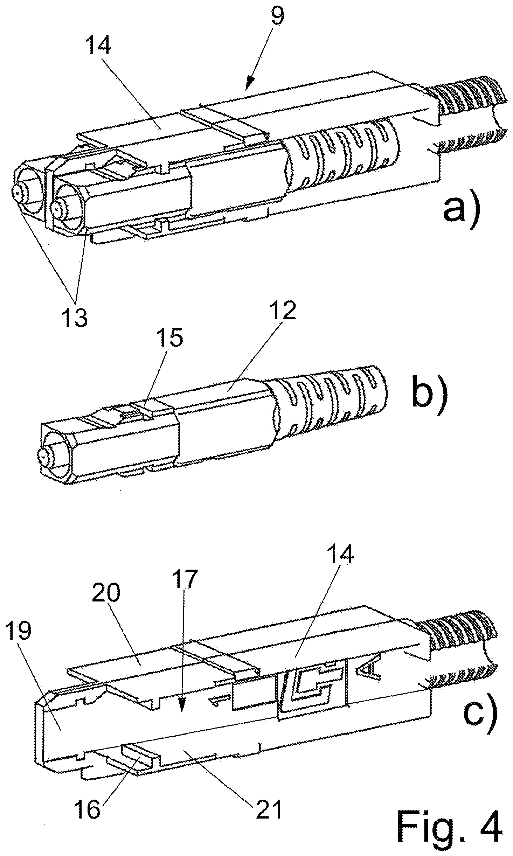

Die Adapter-Buchsengehäuse 5 der Fig. 2 bis 4 sind als Flanschgehäuse ausgebildet, d.h., sie weisen einen Flanschabschnitt 18 mit Befestigungslöchern auf, welche beispielsweise von Schrauben durchsetzt werden können, um das Flanschgehäuse beispielsweise an einer Gehäusewand zu befestigen, an der eine Durchführung realisiert ist.

Die beiden Adaptergehäuse 4, 5 sind miteinander koppelbar, so können sie nach Art einer Push-Pull-Verbindung verbindbar und lösbar sein. Durch ein Verriegeln der beiden Adaptergehäuse wird eine Verbindung in der hohen Schutzklasse wie IP67 geschaffen. Hierzu weisen die beiden Adaptergehäuse 4, 5 unter anderem Verriegelungsmittel 6, 7 sowie Dichtungen 8 und andere Funktionselemente auf.

Die beiden Adaptergehäuse 4, 5 sind dazu ausgelegt, jeweils die Steckeranordnung 9 und die Buchsenordnung 10 zu schützen, die in einer relativ zur hohen Schutzklasse der Adaptergehäuse wie IP65 oder höher niedrigeren Schutzklasse wie IP 20 ausgebildet sind.

Die Adaptergehäuse 4, 5 sind - insoweit die vorstehend genannten Funktionen realisiert sind - an sich weitgehend beliebig ausgestaltbar. Insofern wird auf den eingangs genannten Stand der Technik verwiesen.

Werden die Steckverbinder 2, 3 gekoppelt bzw. zusammengesteckt, wird eine lichtleitende oder elektrisch leitende Verbindung zwischen entsprechenden Kontaktbereichen der Steckeranordnung 9 und der Buchsenanordnung 10 geschaffen. Die Adaptergehäuse 4, 5 werden zudem miteinander gekoppelt und vorzugsweise miteinander verriegelt.

Die Adaptergehäuse 4, 5 werden vorzugsweise - aber nicht zwingend - derart ausgelegt, dass sie zur Aufnahme verschiedenster Stecker- bzw. Buchsenanordnungen 9, 10 ausgebildet sind, die RJ45 und andere Systeme zur Verbindung elektrischer Leiter sowie verschiedene Systeme zur Verbindung von Lichtwellenleitern umfassen können.

Die Adaptergehäuse 4, 5 sind zumindest derart ausgelegt, dass sie zur Aufnahme von Steckeranordnungen 9 bzw. Buchsenanordnungen 10 ausgebildet sind, die zur Kopplung von Lichtwellenleitern dienen. Die Adaptergehäuse 4, 5 werden bevorzugt derart ausgestaltet, dass in sie Steckeranordnungen 9 und Buchsenanordnungen 10 z.B. im so genannten RJ45-Standard, LC-Duplex oder 2SC im Abstand eines SC-RJ einsetzbar sind.

Bevorzugt wird bei der erfindungsgemäßen Steckverbindung in das Adaptergehäuse 5 des buchsenartigen Steckverbinders 3 eine Buchsenanordnung 10 für Lichtwellenleiter eingesetzt, die Kopplungsmittel, insbesondere wenigstens einen oder mehrere Rasthaken, 11 zur Realisierung einer verriegelbaren Push-Pull-Verbindung aufweist. Insbesondere ist die Buchsenanordnung 10, die in das zweite Adaptergehäuse 5 eingesetzt ist, als sogenannte SC-, insbesondere als SCRJ-Buchsenanordnung ausgebildet.

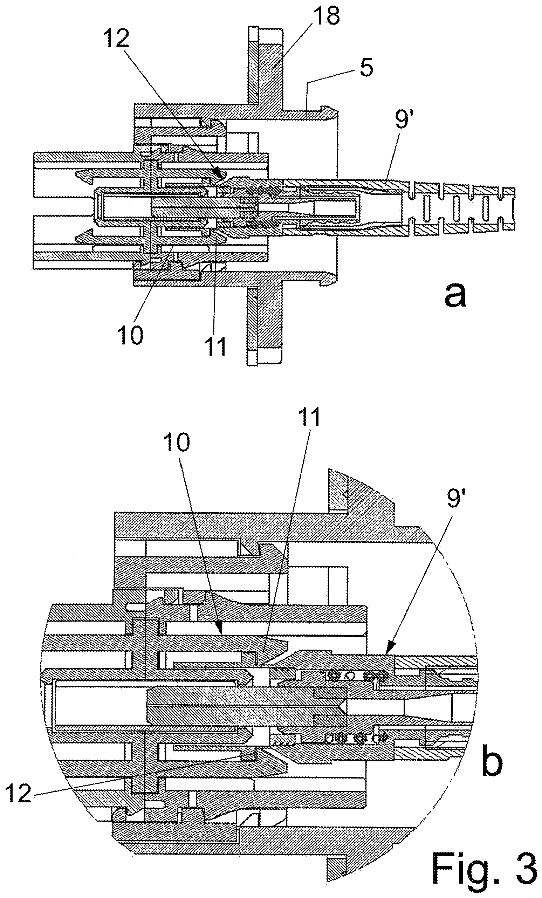

Die Buchsenanordnung 10 ist derart im Adaptergehäuse 5 aufgenommen, dass es möglich ist, sie nach Art der Fig. 3 mit der Steckeranordnung 9' zu koppeln, die in dem gleichen Industriestandard ausgebildet ist, also insbesondere ebenfalls als sogenannte SC-Steckeranordnung, insbesondere als SCRJ-Steckeranordnung, welche korrespondierende Kopplungsmittel, insbesondere wenigstens eine oder mehrere Rastausnehmungen 12 zur Realisierung der Push-Pull-Verbindung aufweist.

Diese Anordnung (siehe das Bezugszeichen 9') ist in Fig. 3 dargestellt. Derart kann das erste Steckverbinderteil mit einem Standardsteckerteil 9' ohne äußeres Adapterschutzgehäuse gekoppelt werden, wobei die Push-Pull-Kopplungs- bzw. - verriegelungsmittel zur Wirkung kommen (Fig. 3).

In das erste Adaptergehäuse 4 des steckerartigen Steckverbinders 2 ist dagegen eine Steckeranordnung 9 eingesetzt (Fig. 2), die zwar der Steckeranordnung 9' in Hinsicht auf das Steckgesicht entspricht, die aber derart ausgestaltet ist, dass die Push-Pull-Kopplungsmittel, insbesondere der wenigstens eine oder die Rasthaken 11 beim Zusammenstecken bzw. im zusammengesteckten Zustand der Steckverbinder 2 und 3 nicht zur Wirkung kommen. Verrastet wird die Verbindung allein durch eine Verriegelung/Verrastung zwischen den Adaptergehäusen 4, 5.

Dies wird dadurch erreicht, dass die Steckeranordnung 9 derart ausgestaltet ist, dass der wenigstens eine Rasthaken 11 beim Zusammenschieben nicht rastend in eine Rastausnehmung eintaucht. Eine entsprechende Rastausnehmung ist an der Steckeranordnung9 nicht ausgebildet. Insbesondere wird der wenigstens eine Rasthaken 11 im zusammengesteckten Zustand nicht deformiert oder aber zumindest nicht derart deformiert, so dass der Rasthaken auch nicht mit der Zeit seine Federwirkung verlieren kann.

Wird der erste Steckverbinder 2 mit dem zweiten Steckverbinder 3 zusammengesteckt, kommen somit zwar Mittel zur Wirkung, welche eine Verriegelung, z.B. eine Push-Pull-Verbindung zwischen den Adaptergehäusen 4, 5 realisieren, es wird aber keine Push-Pull-Verbindung zwischen der Steckeranordnung und der Buchsenanordnung 10 realisiert sondern die Steckeranordnung 9 und die Buchsenanordnung werden derart zusammengesteckt, dass sie allein durch Ziehen in entgegen gesetzter Richtung voneinander trennbar sind.

Nach Fig. 1 bis 4 weist die in Steckeranordnung 9 des steckerartigen Steckverbinders, die in das Adaptergehäuse 4 eingesetzt ist, zwei 2SC-Einsätze 13 auf, die in einem Hilfsrahmen 14 im Abstand eines SC-RJ-Steckverbinders gehalten sind, der in dem Adaptergehäuse 4 gehalten ist..

Dabei werden die in das Adaptergehäuse 4 eingesetzte Steckeranordnung 9, insbesondere die Einsätze 13 und der Hilfsrahmen 14, derart ausgestaltet, dass die Mittel, insbesondere der Rasthaken 11, an der Buchsenanordnung 10, die/der zur Realisierung einer Push-Pull Verbindung mit dem Steckerteil 9' im Industriestandard dient, beim Einstecken des Steckerteils in das Buchsenteil nicht deformiert wird/werden, so dass im zusammen gesteckten Zustand auf diesen einen oder mehrere Rasthaken keine Kraft wirkt, welche diesen mit der Zeit deformiert.

Hierzu wird einerseits der Hilfsrahmen 14 derart ausgestaltet, dass er im Bereich, in welchem der Rasthaken im zusammengesteckten Zustand eintaucht, eine Freimachung bzw. keine Fläche aufweist, welche den oder die Rasthaken im zusammengesteckten Zustand aufbiegt.

Zusätzlich werden die SC-Einsätze 13 derart ausgestaltet, dass die Rasthaken 11 der Buchsenanordnung 10 im zusammengesteckten Zustand nicht rastend in sie eingreifen, derart, dass durch rein axiales auseinander ziehen die innere Steckverbindung zwischen dem Steckverbinderteil in der niedrigen Schutzart wie IP20 auseinander gezogen werden können.

Der Hilfsrahmen 14 weist zwischen den Einsätzen eine Trennwand 19 auf sowie eine obere und eine untere Abdeckwand 20, 21, wobei die Trennwand zum Steckgesicht hin über die Abdeckwände vorsteht.

Zusätzlich werden eine oder hier je zwei Aufnahmegeometrien, vorzugsweise Nuten 15 in (vorzugsweise voneinander abgewandten) Flächen der Abdeckwände 20, 21 der SC-Einsätze 13 ausgebildet, die mit einem oder mehreren Gegengeometrien, vorzugsweise Stegen 16 oder dgl. in Aufnahmebereichen 17 des Hilfsrahmen 14 für die SC-Einsätze 13 zusammenwirken, um die SC-Einsätze an den Hilfsrahmen in axialer Richtung - d.h. in Steckrichtung - festzulegen.

Anzumerken ist noch, dass das in Fig. 1 c dargestellte Adaptergehäuse einen Grundgehäuseabschnitt 22 aufweist, über den eine hier zweiteilige Verriegelungshülse 23 steckbar ist, welche zur Realisierung einer Push-Pullfunktion im Zusammenspiel mit der Adaptergehäuse 5 dient. Mehrere Rasthakenanordnungen 24 dienen zur Festlegung der Steckeranordnung, wobei hier ein Freiraum in dem Grundgehäuseabschnitt 22 derart groß ausgestaltet ist, dass in den Grundgehäuseabschnitt 22 vor dem Einschieben der Steckeranordnung zuvor noch ein Zwischenrahmen 30 einsetzbar ist, welcher zur Aufnahme der eigentlichen Steckeranordnung 9 dient. Am Grundgehäuseabschnitt 22 ist ferner ein Kabelverschraubungsabschnitt 25 ausgebildet, wobei zur Kabelverschraubung noch Elemente 26, 27 und 28 gehören. Vorteilhaft ist, dass der eigentliche Grundgehäuseabschnitt 22 nicht mehrere relativ zueinander verschiebliche Teile aufweist, so dass das Gehäuse besonders stabil und leicht handhabbar ist.

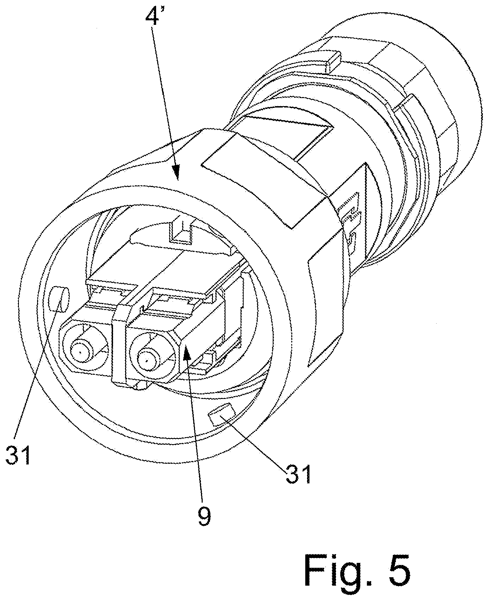

Fig. 5 zeigt ein weiteres, mehrteiliges, Adaptergehäuse 4' zur Aufnahme einer Steckeranordnung 9 nach Art der Fig. 1 bis 4. Dieses Adaptergehäuse 4' weist an seinem Innenumfang als Verriegelungsmittel Vorsprünge 31 auf, die einen Teil einer Bajonettverriegelung bilden. Am korrespondierenden Adaptergehäuse (hier nicht dargestellt) sind in diesem Fall an dessen Außenumfang als Verriegelungsmittel korrespondierende wendelförmige Aufnahmenuten ausgebildet, in welche diese Vorsprünge 31 eingreifen.

**Bezugszeichen**

| | |
|---|---|
| Steckverbindung | 1 |
| Steckverbinder | 2, 3 |
| Adaptergehäuse (Stecker, Flansch) | 4, 5 |
| Verriegelungsmittel | 6, 7 |
| Dichtungen | 8 |
| Steckeranordnung | 9 |
| Steckeranordnung | 9' |
| Buchsenordnung | 10 |
| Rasthaken, Verriegelungsmittel | 11 |
| Rastausnehmungen | 12 |
| SC-Einsätze | 13 |
| Hilfsrahmen | 14 |
| Aufnahmegeometrien | 15 |
| Gegengeometrien | 16 |
| Aufnahmebereiche | 17 |
| Flansch | 18 |
| Trennwand | 19 |
| Abdeckwand | 20, 21 |
| Grundgehäuseabschnitt | 22 |
| Verriegelungshülse | 23 |
| Rasthakenanordnungen | 24 |
| Kabelverschraubungsabschnitt | 25 |
| Elemente | 26, 27 und 28 |
| Gehäusewand | 29 |
| Zwischenrahmen | 30 |
| Vorsprünge | 31 |

## Patentansprüche

1. Steckverbindung mit einem ersten, steckerartigen Steckverbinder (2) und einem zweiten, buchsenartigen Steckverbinder (3), mit folgenden Merkmalen:
a. der erste Steckverbinder (2) weist eine äußere Adapter-Schutzgehäuseanordnung - ein Adaptergehäuse (4, 4') - auf, in die eine Steckeranordnung (9)zur Verbindung von Leitern, vorzugsweise von Lichtwellenleitern, eingesetzt ist,
b. der zweite buchsenartige Steckverbinder (3) weist eine äußere Adapter-Schutzgehäuseanordnung - ein weiteres Adaptergehäuse (5) - auf, in die eine Buchsenanordnung (10) eingesetzt ist,
c. wobei die beiden Adaptergehäuse (4, 4', 5) miteinander koppelbar, insbesondere verriegelbar sind,
d. und wobei die Buchsenanordnung (10) im Adaptergehäuse (5) ferner Verriegelungsmittel (11) aufweist, die an sich dazu ausgelegt sind, eine verriegelbare Push-Pull-Verbindung zu realisieren, **dadurch gekennzeichnet, dass**
e. die in das Adaptergehäuse (4, 4') des steckerartigen Steckverbinders eingesetzte Steckeranordnung (9) derart ausgelegt ist, dass die Verriegelungsmittel (11) der Buchsenanordnung (10) im zusammengesteckten Zustand nicht oder nicht wesentlich ausgelenkt oder deformiert werden und im verbundenen Zustand außer Funktion sind, wobei
f. die Steckeranordnung (9) des steckerartigen Steckverbinders (2) verriegelungsmittelfrei ausgestaltet ist, derart, dass die Verriegelungsmittel (11) der Buchsenanordnung im Adaptergehäuse (5) des buchsenartigen Steckverbinders (3) nicht an der Steckeranordnung (9) des Steckverbinders (2) verrastet sind.

2. Steckverbindung nach Anspruch 1, **dadurch gekennzeichnet, dass** eine möglicherweise noch auftretende geringe Deformation der Verriegelungsmittel (11) derart gering ist, dass sie nach einem über einen längeren Zeitraum von mehr als drei Jahren nicht in mehr als 10%, insbesondere nicht in mehr als 5% der Fälle zu einer dauerhaften Deformation der Verriegelungsmittel (11) führt, welche diese unbrauchbar machen.

3. Steckverbindung nach einem der vorstehenden Ansprüche, **dadurch gekennzeichnet, dass** die Adaptergehäuse (4, 5) zumindest derart ausgelegt sind, dass sie zur Aufnahme von Steckeranordnungen (9) bzw. Buchsenanordnungen (10) ausgebildet sind, die zur Kopplung von Standardlichtwellenleitern dienen.

4. Steckverbindung nach einem der vorstehenden Ansprüche, **dadurch gekennzeichnet, dass** in das Adaptergehäuse (5) des buchsenartigen Steckverbinders (3) eine Buchsenanordnung (10) für eine Lichtwellenleiterverbindung eingesetzt ist, die als die Verriegelungsmittel wenigstens einen oder mehrere Rasthaken (11) zur Realisierung einer Push-Pull-Verbindung aufweist.

5. Steckverbindung nach einem der vorstehenden Ansprüche, **dadurch gekennzeichnet, dass** an die Buchsenanordnung (10) im Adaptergehäuse (5) eine andere Steckeranordnung (9') ohne Adaptergehäuse (4) ansetzbar ist, die zu den Verriegelungsmitteln (11) der Buchsenanordnung (10) korrespondierende und mit diesen koppelbare Verriegelungsmittel aufweist.

6. Steckverbindung nach einem der vorstehenden Ansprüche, **dadurch gekennzeichnet, dass** die Buchsenanordnung (10), die in das zweite Adaptergehäuse (5) eingesetzt ist, als SC-, insbesondere als SCRJ-Buchsenanordnung (10) ausgebildet ist.

7. Steckverbindung nach einem der vorstehenden Ansprüche, **dadurch gekennzeichnet, dass** die Steckeranordnung (9') wenigstens eine oder mehrere Rastausnehmungen (12) und ein relativ zu den Lichtwellenleitern bewegliches Gehäuseteil zur Realisierung der Push-Pull-Verbindung aufweist.

8. Steckverbindung nach einem der vorstehenden Ansprüche, **dadurch gekennzeichnet, dass** die Steckeranordnung (9) des steckerartigen Steckverbinders , die in das Adaptergehäuse (4) eingesetzt ist, zwei 2SC-Einsätze (13) aufweist, die in einem Hilfsrahmen (14) im Abstand eines SC-RJ-Steckverbinders gehalten sind, der in dem Adaptergehäuse (4) gehalten ist.

9. Steckverbindung nach einem der vorstehenden Ansprüche, **dadurch gekennzeichnet, dass** der Hilfsrahmen (14) derart ausgestaltet ist, dass er im Bereich, in welchem der Rasthaken im zusammengesteckten Zustand eintaucht, eine Freimachung bzw. keine Fläche aufweist, welche den oder die Rasthaken (11) im zusammengesteckten Zustand aufbiegt

10. Steckverbindung nach einem der vorstehenden Ansprüche, **dadurch gekennzeichnet, dass** die SC-Einsätze (13) derart ausgestaltet sind, dass die Rasthaken (11) der Buchsenanordnung (10)im zusammengesteckten Zustand nicht rastend in sie eingreifen, derart, dass durch rein axiales Auseinander ziehen die innere Steckverbindung zwischen der Stecker- und der Buchsenanordnung (9, 10) lösbar ist.

11. Steckverbindung nach einem der vorstehenden Ansprüche, **dadurch gekennzeichnet, dass** eine oder mehrere Aufnahmegeometrien (15), insbesondere Nuten, in Flächen der SC-Einsätze (13) ausgebildet sind, die mit einem oder mehreren Gegengeometrien (16), insbesondere Stegen, in Aufnahmebereichen (17) des Hilfsrahmen (14) für die SC-Einsätze (13) zusammenwirken, um die SC-Einsätze (13) an den Hilfsrahmen in axialer Richtung - d.h. in Steckrichtung - festzulegen.

12. Steckverbindung nach einem der vorstehenden Ansprüche, **dadurch gekennzeichnet, dass**
a. SC-Rasthaken (11) der Buchsenanordnung (10) bzw. der Kupplung im Adaptergehäuse mit den SC- bzw. SC-RJ-Einsätzen im Adaptergehäuse (4) nicht verrasten,
b. die SC-Rasthaken (11) für den SC- bzw. SC-RJ-Steckereinsatz nicht aufgeweitet werden und
c. beim Einstecken eines IP20-Servicesteckers dieser mit den SC-Rasthaken (11) des Transceivers bzw. der Kupplung verrastbar ist.

## Claims

1. Plug connection having a first, plug-type plug connector (2) and a second, socket-type plug connector (3), comprising the following features:
a) the first plug connector (2) has an outer adapter protective housing arrangement - an adapter housing (4, 4') - in which a plug arrangement (9) for connecting conductors, preferably optical waveguides, is inserted,
b) the second socket-type plug connector (3) has an outer adapter protective housing arrangement - a further adapter housing (5) - into which a socket arrangement (10) is inserted,
c) wherein the two adapter housings (4, 4', 5) can be coupled to one another, in particular lockable,
d) and wherein the socket arrangement (10) in the adapter housing (5) further comprises locking means (11) adapted per se to provide a lockable push-pull connection,
**characterized in that**
e) the plug arrangement (9) inserted into the adapter housing (4, 4') of the plug-type plug connector is designed in such a way that the locking means (11) of the socket arrangement (10) are not or not substantially deflected or deformed in the assembled state and are inoperative in the connected state, wherein
f) the plug arrangement (9) of the plug-type plug connector (2) is designed to be free of locking means in such a way that the locking means (11) of the socket arrangement are not locked to the plug arrangement (9) of the plug connector (2) in the adapter housing (5) of the socket-type plug connector (3).

2. Plug connection according to claim 1, **characterized in that** a possibly still occurring slight deformation of the locking means (11) is so small that after a longer period of more than three years it leads to a permanent deformation of the locking means (11) which render them unusable in not more than 10%, in particular in not more than 5%, of the cases.

3. Plug connection according to one of the preceding claims, **characterized in that** the adapter housings (4, 5) are designed at least in such a way that they are designed to accommodate plug arrangements (9) or socket arrangements (10) which serve to couple standard optical waveguides.

4. Plug connection according to one of the preceding claims, **characterized in that** a socket arrangement (10) for an optical waveguide connection is inserted into the adapter housing (5) of the socket-type plug connector (3), which socket arrangement has as the locking means at least one or more latching hooks (11) for realizing a push-pull connection.

5. Plug connection according to one of the preceding claims, **characterized in that** a different plug arrangement (9') without adapter housing (4) can be attached to the socket arrangement (10) in the adapter housing (5), which plug arrangement has locking means which correspond to the locking means (11) of the socket arrangement (10) and can be coupled thereto.

6. Plug connection according to one of the preceding claims, **characterized in that** the socket arrangement (10), which is inserted into the second adapter housing (5), is designed as an SC socket arrangement, in particular as an SC-RJ socket arrangement (10).

7. Plug connection according to one of the preceding claims, **characterized in that** the plug arrangement (9') has at least one or more latching recesses (12) and a housing part which is movable relative to the optical waveguides for realizing the push-pull connection.

8. Plug connection according to one of the preceding claims, **characterized in that** the plug arrangement (9) of the plug-type plug connector inserted into the adapter housing (4) comprises two 2SC inserts (13) held in a subframe (14) at a distance of an SC-RJ plug connector held in the adapter housing (4).

9. Plug connection according to one of the preceding claims, **characterized in that** the subframe (14) is designed in such a way that, in the region in which the latching hook is immersed in the assembled state, it has a clearance or no surface which bends the latching hook or hooks (11) up in the assembled state.

10. Plug connection according to one of the preceding claims, **characterized in that** the SC inserts (13) are designed in such a way that the latching hooks (11) of the socket arrangement (10) do not engage therein in a latching manner in the assembled state, such that the internal plug connection between the plug and socket arrangement (9, 10) can be released by purely axial pulling apart.

11. Plug connection according to one of the preceding claims, **characterized in that** one or more receiving geometries (15), in particular grooves, are formed in surfaces of the SC inserts (13) which interact with one or more counter geometries (16), in particular webs, in receiving regions (17) of the subframe (14) for the SC inserts (13) in order to fix the SC inserts (13) to the subframe in the axial direction, i.e. in the plug-in direction.

12. Plug connection according to one of the preceding claims, **characterized in that**
a) SC latching hooks (11) of the socket arrangement (10) or the coupling in the adapter housing do not latch with the SC or SC-RJ inserts in the adapter housing (4),
b) the SC latching hooks (11) for the SC or SC-RJ connector insert are not expanded, and
c) when an IP20 service connector is inserted, it can be latched with the SC latching hooks (11) of the transceiver or the coupling.

## Revendications

1. Connexion enfichée avec un premier connecteur enfichable mâle (2) et un deuxième connecteur enfichable femelle (3), présentant les caractéristiques suivantes :
a. le premier connecteur enfichable (2) présente une disposition extérieure de protection d'adaptateur - un boîtier d'adaptateur (4, 4') - dans laquelle une disposition de connecteur (9) pour la connexion de conducteurs, par exemple de guides d'ondes lumineuses, est introduite,
b. le deuxième connecteur enfichable femelle (3) présente une disposition extérieure de protection d'adaptateur - un autre boîtier d'adaptateur (5) - qui est introduite dans une disposition de douille (10),
c. les deux boîtiers d'adaptateur (4, 4', 5) pouvant être couplés ensemble et en particulier verrouillés
d. et la disposition de douille (10) dans le boîtier d'adaptateur (5) présentant en outre des moyens de verrouillage (11) conçus eux-mêmes pour réaliser une connexion *push-pull* verrouillable,
**caractérisée en ce que**
e. la disposition de connecteur (9) introduite dans le boîtier d'adaptateur (4, 4') du connecteur enfichable mâle est conçue de telle façon que les moyens de verrouillage (11) de la disposition de douille (10) ne soient pas ou pas notablement déviés ou déformés et dans l'état connecté et hors fonction dans l'état assemblé,
f. la disposition de connecteur (9) du connecteur enfichable mâle (2) étant conçue sans moyens de verrouillage, de sorte que les moyens de verrouillage (11) de la disposition de douille dans le boîtier d'adaptateur (5) du connecteur enfichable femelle (3) ne sont pas enclenchés sur la disposition de connecteur (9) du connecteur enfichable (2).

2. Connexion enfichée selon la revendication 1, **caractérisée en ce qu'**une faible déformation des moyens de verrouillage (11) qui pourrait encore se produire est suffisamment faible pour qu'elle n'entraîne pas, après une période prolongée de plus de trois ans, une déformation permanente des moyens de verrouillage (11) rendant ceux-ci inutilisables dans plus de 10% des cas, en particulier pas dans plus de 5 % des cas.

3. Connexion enfichée selon l'une des revendications précédentes, **caractérisée en ce que** les boîtiers d'adaptateur (4, 5) sont au moins en partie conçus pour recevoir des dispositions de connecteur (9) ou des dispositions de douille (10) servant au couplage de guides d'ondes lumineuses standard.

4. Connexion enfichée selon l'une des revendications précédentes, **caractérisée en ce qu'**il est prévu dans le boîtier d'adaptateur (5) du connecteur enfichable femelle (3) une disposition de douille (10) pour une connexion de guides d'ondes lumineuses qui présente, comme moyens de verrouillage, au moins un ou plusieurs crochets d'enclenchement (11) pour la réalisation d'une connexion *push-pull.*

5. Connexion enfichée selon l'une des revendications précédentes, **caractérisée en ce que** peut être posée sur la disposition de douille (10) dans le boîtier d'adaptateur (5) une autre disposition de connecteur (9') sans boîtier d'adaptateur (4) qui présente des moyens de verrouillage correspondant aux moyens de verrouillage (11) de la disposition de douille (10) et pouvant être couplés avec ceux-ci.

6. Connexion enfichée selon l'une des revendications précédentes, **caractérisée en ce que** la disposition de douille (10) introduite dans le deuxième boîtier d'adaptateur (5) est réalisée comme une disposition de douille (10) SC, en particulier SCRJ.

7. Connexion enfichée selon l'une des revendications précédentes, **caractérisée en ce que** la disposition de connecteur (9') présente au moins un ou plusieurs creux d'enclenchement (12) et une partie de boîtier mobile par rapport aux guides d'ondes lumineuses pour réaliser la connexion *push-pull.*

8. Connexion enfichée selon l'une des revendications précédentes, **caractérisée en ce que** la disposition de connecteur (9) du connecteur enfichable mâle qui est introduite dans le boîtier d'adaptateur (4) présente deux inserts 2SC (13) qui sont retenus dans un cadre auxiliaire (14) à distance d'un connecteur enfichable SCRJ qui est retenu dans le boîtier d'adaptateur (4).

9. Connexion enfichée selon l'une des revendications précédentes, **caractérisée en ce que** le cadre auxiliaire (14) est conformé de manière à présenter, dans la zone dans laquelle le crochet d'enclenchement s'insère dans l'état enfiché, un dégagement ou une absence de surface tordant le ou les crochets d'enclenchement (11) pour les ouvrir dans l'état enfiché.

10. Connexion enfichée selon l'une des revendications précédentes, **caractérisée en ce que** les inserts SC (13) sont conformés de telle manière que les crochets d'enclenchement (11) de la disposition de douille (10) ne s'y enclenchent pas dans l'état enfiché, de telle sorte qu'une traction de séparation strictement axiale puisse défaire la connexion enfichée intérieure entre la disposition de connecteur et la disposition de douille (9, 10).

11. Connexion enfichée selon l'une des revendications précédentes, **caractérisée en ce qu'**une ou plusieurs géométries de logement (15), en particulier des rainures, sont formées dans des surfaces des inserts SC (13) et coopèrent avec une ou plusieurs géométries opposées (16), en particulier des barrettes, dans des zones de réception (17) du cadre auxiliaire (14) destinées aux inserts SC (13), afin de fixer les inserts SC (13) sur le cadre auxiliaire dans le sens axial, c'est-à-dire dans le sens de l'enfichage.

12. Connexion enfichée selon l'une des revendications précédentes, **caractérisée en ce que**
a. des crochets d'enclenchement SC (11) de la disposition de douille (10) ou du couplage dans le boîtier d'adaptateur ne s'enclenchent pas avec les inserts SC ou SCRJ dans le boîtier d'adaptateur (4),
b. les crochets d'enclenchement SC (11) pour l'insert de connecteur SC ou SCRJ ne sont pas élargis et
c. lors de l'insertion d'un connecteur de maintenance IP20, celui-ci peut être enclenché avec le crochet d'enclenchement SC (11) de l'émetteur-récepteur ou du couplage.
